# EUROPEAN PATENT SPECIFICATION

(11) **EP 3 834 146 B1**
(45) Date of publication and mention of the grant of the patent: **18.12.2024**
(21) Application number: 19849085.6
(22) Date of filing: 05.08.2019
(51) Int. Cl.: G06Q 10/06

(54) **A METHOD AND A SYSTEM FOR MONITORING A FIRE OR SECURITY SYSTEM AND A STORAGE MEDIUM**
VERFAHREN UND SYSTEM ZUR ÜBERWACHUNG EINES FEUER- ODER SICHERHEITSSYSTEMS UND SPEICHERMEDIUM
PROCÉDÉ ET SYSTÈME DE SURVEILLANCE D'UN SYSTÈME DE SÉCURITÉ OU DE DÉTECTION D'INCENDIE ET SUPPORT DE STOCKAGE

(30) Priority: 07.08.2018 CN 201810891613
(43) Date of publication of application: 16.06.2021
(73) Proprietor: Carrier Corporation, Palm Beach Gardens, FL 33418 (US)
(72) Inventor: JIA, Zhen, Shanghai 201204 (CN); SHA, Danqing, Shanghai 201204 (CN); LI, Benliang, Beijing (CN); SUN, Ellen, East Hartford, Connecticut 06108 (US)
(74) Representative: Dehns
(86) International application number: PCT/US2019/045073
(87) International publication number: WO 2020/036759

(56) References cited:
- EP-A2- 1 918 893
- CN-A- 102 999 813
- CN-A- 104 574 761
- CN-A- 106 527 309
- CN-A- 107 895 451
- CN-U- 203 588 054
- CN-U- 204 480 426
- CN-U- 204 679 775
- CN-U- 205 068 087
- CN-U- 205 177 045
- CN-U- 205 375 777
- CN-U- 205 959 337
- CN-Y- 201 091 757
- US-A1- 2017 262 697
- MATTHIAS BETZ ET AL: "EmergencyMessenger", HUMAN FACTORS IN COMPUTING SYSTEMS, ACM, 2 PENN PLAZA, SUITE 701 NEW YORK NY 10121-0701 USA, 26 April 2014 (2014-04-26), pages 1515 - 1524, XP058046722, ISBN: 978-1-4503-2473-1, DOI: 10.1145/2556288.2557188

## Description

### FIELD OF THE INVENTION

The present invention relates to fire or security technical field, and especially to a method and a system for monitoring a fire or security system as well as a storage medium.

### BACKGROUND

Various types of fire or security systems have been already widely employed in modern societies, which play an enormously important part to ensure the normal use of buildings, the personal security, the equipment and asset security etc.. Generally, the existing fire or security systems are monitored mainly by fire panels or automatic monitoring and managing system of local buildings. However, the existing monitoring means still contain some flaws and deficiencies, such as the monitoring means are relatively complicated and single, the information transmission is not timely enough, the information coverage is limited and the information interaction means is not flexible enough.

EP 1918893 A1 discloses a fire alarm system having a remote access capability via an automatic instant messaging system that provides both public and private communications paths.

CN 107895451 A discloses an internet-of-things fire-fighting system comprising system hardware, a cloud server, and a user mobile phone app. The cloud server receives a data stream transmitted by the system hardware, and transmits data to the user mobile phone app. The user mobile phone app side includes a data viewing module.

### SUMMARY OF THE INVENTION

In view of the foregoing, the present invention provides a method and a system for monitoring a fire or security system as well as a storage medium, in order to address and at least relieve one or more of the above-described problems existing in prior arts and problems in other aspects. Claims 1, 9, and 15 define the present invention. Preferred embodiments are disclosed in the dependent claims.

Firstly, according to a first aspect of the present invention, the present invention provides a method for monitoring a fire or security system, comprising the steps of:
creating on a social media platform one or more official accounts or groups associated with the fire or security system; and
pushing data information relevant to the fire or security system to a user that has followed the official accounts and/or joined the groups, and receiving a request sent by the user via the social media platform to perform a monitoring operation directed to at least one device of the fire or security system
wherein the step of pushing data information relevant to the fire or security system to the user comprises transmitting to the user, via the social media platform, emergency information when an emergency happens to the fire or security system, the emergency information at least comprising an escape route in the position where the fire or security system is, an exit route for evacuation and/or a current position of security and survival devices comprising a fireproof mask, a fire extinguisher, a fire hose, a fire indicator, an emergency power supply and an emergency light, and
wherein the monitoring operation comprises:
   acquiring and/or processing event information of the fire or security system, which comprises a fire alarm and a device fault alarm;
   acquiring a security notice of the fire or security system,
   receiving said request in the monitoring operation, sent by the user via the social media platform, to re-start or stop the operation of corresponding devices of the fire or security system, and
   obtaining information of one or more devices of the fire or security system, the information including device configuration information including structural parameters, operation parameters and installation positions, and device history information which are obtained and then displayed on a mobile communication terminal of a user.

In the method according to the present invention, optionally, it further comprises: connecting the device communicatively with the social media platform via a cloud platform for at least storing interface information of the device and receiving and processing the request to perform a monitoring operation directed to the device by invoking an interface of the device.

In the method according to the present invention, optionally, it further comprises: connecting the device communicatively with a cloud platform for at least storing interface information of the device, and connecting the cloud platform communicatively with the social media platform via an application server for receiving and processing the request to perform a monitoring operation directed to the device by invoking an interface of the device via the cloud platform.

In the method according to the present invention, optionally, it further comprises: connecting the application server communicatively with a database server for at least storing the content of the request, the content of the monitoring operation and/or the data information obtained by the monitoring operation from the fire or security system; and/or
providing the cloud platform or the application server with an information processing module with a smart data analysis function including fault diagnosis, prediction and analysis, to push the data information processed by the information processing module to the user.

In the method according to the present invention, optionally, the data information obtained by the monitoring operation from the fire or security system are transmitted, in the form of text, audio, picture and/or video, via the application server to a mobile communication terminal of the user, an access way of which is provided by the user when registering on the social media platform.

In the method according to the present invention, optionally, it further comprises: enabling the user, when following the official accounts or joining the groups, to input register information at least comprising user ID information and device information via the social media platform.

In the method according to the present invention, optionally, it further comprises: performing authentication for the user based on the register information after the request is received, and processing the request if the authentication is passed.

In the method according to the present invention, optionally, the monitoring operation comprises one or more of the following:
acquiring information of one or more devices of the fire or security system, which comprises real-time device information, device configuration information, device control information and device history information; and
managing or configuring one or more devices of the fire or security system.

In the method according to the present invention, optionally, the step of pushing data information relevant to the fire or security system to a user comprises one or more of the following:
transmitting to the user, via the social media platform, the data information obtained from the fire or security system by the monitoring operation;
transmitting to the user, via the social media platform, a device maintaining plan and/or a reminder of a coming device maintaining plan of the fire or security system, the user comprising staff of the fire or security system.

In the method according to the present invention, optionally, the information relevant to the device is pushed, in the form of text, audio, picture and/or video, to the user via the social media platform.

In the method according to the present invention, optionally, the device comprises a smog sensor, an imaging sensor, a gas sensor, a water sensor, a temperature sensor, a fire extinguisher, a fire hose, a fire or security indicator, a fireproof mask, an emergency power supply and an emergency light.

Secondly, according to a second aspect of the present invention, it provides a system for monitoring a fire or security system, comprising:
a creation module configured to create on a social media platform one or more official accounts or groups associated with the fire or security system; and
a processing module configured to push data information relevant to the fire or security system to a user that has followed the official accounts and/or joined the groups, and receive a request sent by the user via the social media platform to perform a monitoring operation directed to at least one device of the fire or security system,
wherein the process of pushing data information relevant to the fire or security system to a user comprises transmitting to the user, via the social media platform, emergency information when an emergency happens to the fire or security system, the emergency information at least comprising an escape route in the position where the fire or security system is, an exit route for evacuation and/or a current position of security and survival devices comprising a fireproof mask, a fire extinguisher, a fire hose, a fire indicator, an emergency power supply and an emergency light, and
wherein the monitoring operation comprises:
   acquiring and/or processing event information of the fire or security system, which comprises a fire alarm and a device fault alarm;
   acquiring a security notice of the fire or security system,
   receiving said request in the monitoring operation, sent by the user via the social media platform, to re-start or stop the operation of corresponding devices of the fire or security system, and
   obtaining information of one or more devices of the fire or security system, the information including device configuration information including structural parameters, operation parameters and installation positions, and device history information which are obtained and then displayed on a mobile communication terminal of a user.

In the system according to the present invention, optionally, the monitoring operation comprises one or more of the following:
acquiring information of one or more devices of the fire or security system, which comprises real-time device information, device configuration information, device control information and device history information; and
managing or configuring one or more devices of the fire or security system.

In the system according to the present invention, optionally, the process of pushing data information relevant to the fire or security system to a user comprises one or more of the following:
transmitting to the user, via the social media platform, the data information obtained from the fire or security system by the monitoring operation;
transmitting to the user, via the social media platform, a device maintaining plan and/or a reminder of a coming device maintaining plan of the fire or security system, the user comprising staff of the fire or security system.

In the system according to the present invention, optionally, the processing module is configured to push the information relevant to the device, in the form of text, audio, picture and/or video, to the user via the social media platform.

In the system according to the present invention, optionally, the device comprises a smog sensor, an imaging sensor, a gas sensor, a water sensor, a temperature sensor, a fire extinguisher, a fire hose, a fire or security indicator, a fireproof mask, an emergency power supply and an emergency light.

Moreover, according to a third aspect of the present invention, it further provides a storage medium for storing instructions, when being executed, to implement the method for monitoring the fire or security system according to any one of the above items.

From the following description in combination with figures, one will clearly understand the principles, characteristics, features and advantage of various technical solutions of the present invention. The present invention employs, for example, advanced digital technologies and mobile communication technologies, which can enable remote monitoring of one or more devices in a fire or security system. A user may use a device, such as a mobile phone, to obtain information of the fire or security system flexibly and timely by multiple means such as text, audio, picture and video, and is able to carry out various monitoring processing directed to the devices of the system, making monitoring means of the fire or security system diverse and information interaction more convenient and reliable, and effectively increasing the information transmission coverage of the fire or security system and enhancing the security performance of the fire or security system. The principle of the present invention is presented by examples, however, the descriptions are given merely for explanation, which should not be understood to limit the range of the present invention.

### BRIEF DESCRIPTION OF THE DRAWINGS

The technical solutions of the present invention will be further described in detail below in conjunction with the drawings and embodiments. However, it should be understood that the drawings are designed merely for illustrative purpose and are intended only to conceptually explain the configuration described herein. It is unnecessary to draw the drawings in proportion.
Fig. 1 is a schematic flow diagram illustrating an embodiment of the method for monitoring a fire or security system according to the present invention via network.
Fig. 2 is a schematic figure illustrating an embodiment of the system for monitoring a fire or security system according to the present invention via network.

### DETAILED DESCRIPTION

First of all, it should be noted that steps, compositions, features and merits of the method and system for monitoring a fire or security system as well as a storage medium according to the present invention will be illustrated hereinafter by way of examples. However, all the descriptions should not impose any limitation to the present invention. In the application, the term "module" may include a plurality of elements and parts, the term "connect... communicatively" may include wired communications, wireless communications and their combination, the term "fire or security system" covers systems with fire protection, security function or both arranged in one or more positions (e.g., in different buildings), the term "monitor" includes, but is not limited to, supervisory control (such as supervision and detection of a fire or security system or device(s) therein), management (e.g., it may be control over a fire or security system or device(s) thereof, such as noise reduction and restoration of an alarm system, a remote control over a fire or security system, and fault shield) and configurations (e.g., it may be a setting, arrangement or adjustment about a fire or security system or device(s) thereof, which may be directed to, for example, response sensibility or resolution ratios).

Moreover, as for any single technical feature described or implied in embodiments mentioned herein, or any single technical feature described or implied in each figure, the present invention still allows, without any technical difficulties, any combination or deletion of these technical features (or equivalents), such that it should be considered that more such embodiments according to the present invention are within the disclosure scope of this text. Besides, for the sake of simplicity, identical or similar components and features may be labeled in one or more places at the same figure.

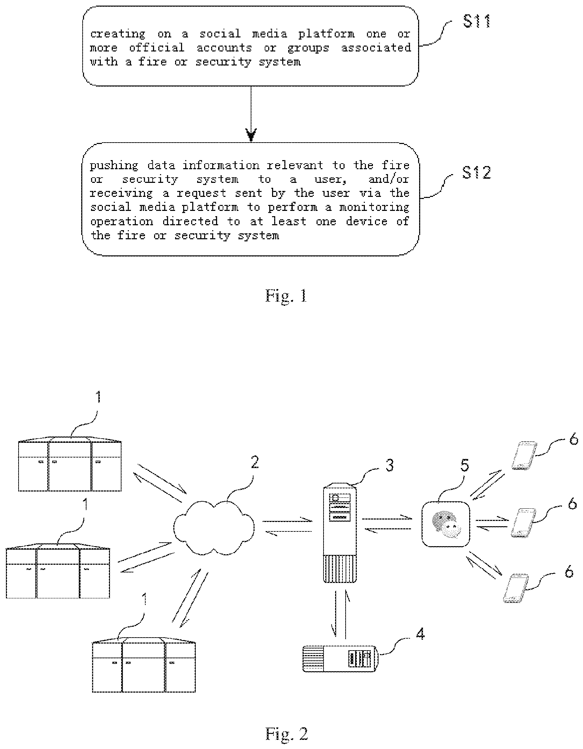

Fig. 1 schematically illustrates the flow of an embodiment of the method for monitoring the fire or security system according to the present invention via network. In the embodiment, the method for monitoring the fire or security system may comprise the following steps:
Firstly, in Step S 11, a social media platform such as Line, WeChat and WhatsAPP that provides a social function, may be applied to create thereon one or more official accounts or groups associated with a fire or security system. The "associated with" herein means to be possibly related to the fire or security system itself (e.g., involving an installation, maintenance, replacement, emergency notice, relevant staff information and the like of a fire or security system), or to one or more devices of a fire or security system (e.g., involving a smog sensor, an imaging sensor, a gas sensor, a water sensor, a temperature sensor, a fire extinguisher, a fire hose, a fire or security indicator, a fireproof mask, an emergency power supply and/or an emergency light).

According to practical demands, the above official accounts or groups may be created to enable the information interaction between the fire or security system and various users (such as device maintaining staff, engineering staff and operation managing staff of the building where the fire or security system locates) based on the social media platform. Generally, fire or security systems are arranged within buildings (especially public buildings), which respectively own different fire protection devices and/or security devices. Therefore, according to various possible application requirements, numerous possible groups may be created for the fire or security systems or the identical or different sensors of the fire or security systems in different buildings to facilitate device monitoring and information interaction. Aforesaid group function may enable persons in the groups to obtain identical data information or other data information simultaneously, which will not only increase the efficiency in cooperative work, but also enable more persons to carry out mutual monitoring and detection of system conditions such as operation maintenance.

Secondly, in Step S12, the user, who has followed the official accounts and/or joined the created groups on the social media platform, may send a request to the official accounts or the groups. The request might be that the user desires to perform a monitoring operation to one or more devices of the fire or security system, or that the user desires to obtain the data information relevant to the fire or security system (e.g., the data information relevant to the fire or security system itself, or relevant to one or more devices of the fire or security system), or that the user requests to deal with affairs in other aspects. In response to the user request discussed above, a monitoring operation can be carried out directed to corresponding devices of the fire or security system, and/or desired data information relevant to the fire or security system can be pushed to the user based on the request of the user via the social media platform. Moreover, the data information (such as emergency event information, device fault information and a device maintaining plan) relevant to the fire or security system can be voluntarily pushed to the user, the means of which will be particularly helpful when emergencies like a fire happen. It should be understood that, according to special conditions of respective social media platforms, the method of the present invention allows to transmit the data information discussed above, for example, by means of Massive Notification, to an unregistered user in some application circumstances.

In modern societies, various mobile communication terminals (e.g., various smart phones) have been used for communications. These mobile communication terminals can provide various social media platforms such as Line, WeChat, WhatsAPP or the like as mentioned above. Therefore, during taking the above steps, a user may send a request anywhere and anytime very conveniently to carry out a monitoring operation to corresponding devices of the fire or security system, or obtain data information relevant to the fire or security system as desired, or obtain data information voluntarily pushed by the fire or security system - this will extremely enhance the level of monitoring a fire or security system and significantly increase its security and reliability.

In practical application circumstances, a user may initiate one or more types of monitoring operations directed to a fire or security system itself or the devices thereof via a social media platform.

For instance, the monitoring operation might be for the purpose of obtaining information of one or more devices of a fire or security system, the information including, but is not limited to, real-time device information such as defaults and alarms, device configuration information such as structural parameters, operation parameters and installation positions, device control information such as start, stop and re-start and device history information such as fault records and maintenance records, which can be obtained and then displayed on, for example, a mobile communication terminal of a user.

In another case of instance, the monitoring operation might also be for managing or configuring one or more devices of a fire or security system. For example, a user may send a request via a social media platform to exert a remote control over the work states of corresponding devices, e.g., the user may re-start or stop the operation of corresponding devices.

For another instance, the monitoring operation might be for the purpose of obtaining and/or processing event information of a fire or security system. The events include, but are not limited to, fire alarms and device fault alarms. For example, when maintaining staff of the fire or security systems or managing staff of a building inspect events such as fire alarms and device fault alarms in the information pushed by a social media platform, they are able to reach the fields to perform real-time examinations and determine the reality of the events (e.g., whether misinformation of a fire exists), and they are able to deal with the events in field while making a request to change or delete corresponding event information via the social media platform.

Moreover, the monitoring operation might be for obtaining a security notice of a fire or security system. Although such a security notice may be pushed voluntarily to users of a social media platform, the security notice may be pushed to the users based on requests from them, e.g., the users may request on their own initiative to obtain corresponding security notices of a fire or security system in a recent period such as four hours, one day, three days and one week - which may be chosen according to practical requirements, so as to learn the recent operation situations of the fire or security system timely and conveniently.

Further, in practical application circumstances, the data information relevant to a fire or security system may be pushed to a user, which may include one or more cases as follows.

For example, based on a request sent by a user via a social media platform, the desired data information of a fire or security system is fed back to the user. For another example, when a user requests to obtain a current state of a smog sensor in a fire or security system, if the smog sensor upon an examination of the fire or security system is determined to be operating normally, the user will be informed in fed back data information of the smog sensor being in a normal operation state.

For another example, a device maintaining plan of a fire or security system can be pushed vis a social media platform to users such as staff of the fire or security system, and/or the users can be reminded of a coming device maintaining plan, e.g., some extinguisher or extinguishers in a fire or security system needs to be replaced in one month, the next maintaining plan will be of some day, etc. In this manner, the maintenance information will not only be conveniently, timely and correctly transmitted to each person of a maintenance team of a fire or security system, but also efficiently lower the monitoring and maintaining cost of the fire or security system.

For another example, in the circumstance that emergencies happen to a fire or security system, emergency information will be transmitted via a social media platform, e.g., such emergency information may be a real-time notice of the real-time condition of a field, but may at least may comprise an escape route (which is likely to be a preset escape route, or an escape route formed after a dynamic computation carried by the system, or a most reasonable and safest escape route offered according to real-time conditions) in the position where a fire or security system is, an exit route for evacuation and/or security and survival devices (such as fire extinguishers, fire hoses, fireproof masks, security indicators, emergency power supplies and emergency lights) - the exit route may be a scene sensing tool based on sensor data fusion or an optimal exist route calculated based on operation data analysis, which could be used pushed and notified to users of the information as a field escape guide as soon as possible, or could enable the users to find the devices possibly soon to help themselves based on the positional information of the survival devices pushed and notified to the users. This means much to guarantee and increase personal security of the users and to prevent the occurrence of misfortune.

It should be explained that, multiple forms could be employed to push data information to users via a social media platform, e.g., text, audio, picture, video and/or any combinations thereof. The employment of these various forms to transmit information will help users to acquire information more timely, correctly and conveniently, which can reduce or eliminate the cases that the users might overlook information. For example, when an emergency has occurred to a fire or security system, forms such as prominent audios and/or videos can be employed, rather than simple text information. For another example, when a user requests to obtain a current state of some device or devices of a fire or security system, current real-time videos of this or these devices can be directly pushed to the user via a social media platform.

By means of the above embodiment of Fig. 1, the contents such as the flow, operation mode and technical advantage of the method for monitoring the fire or security system according to the present invention have been elaborated. It is necessary to state that, without a deviation from the purport of the present invention, the present invention allows all possible flexible designs, alterations and adjustments may be made based on practical application conditions.

For example, although a communicative connection between a social media platform and a fire or security system may be enabled by directly providing a social media platform with device interfaces of a fire or security system, the present invention also allows enable a communicative connection between them by various cloud platforms.

For example, in some optional embodiments, devices of a fire or security system may be connected communicatively with a social media platform via a cloud platform such as OneNet, wherein the interface information of the device may be stored on the cloud platform for the latter to invoke it when it is necessary. After a user sends a request from a social media platform, the request will be transmitted to the cloud platform via a network; subsequently, the cloud platform will process the request and invoke the interface of a corresponding device based on the request so as to enable a corresponding monitoring operation to the device.

Optionally, after the monitoring operation is completed, the fire or security system may return data information to the cloud platform, and the data information will then pushed to the user after a communication between the cloud platform and the social media platform.

For another example, in some optional embodiments, a cloud platform and an application server may be further set additionally between a fire or security system and a social media platform to assist in interaction processing such as completing a user request and pushing information.

To be specific, the device, cloud platform, application server of a fire or security system can be connected communicatively in turn with a social media platform, wherein the cloud platform stores interface information of the device thereon such that the cloud platform may invoke it when it is necessary, and wherein corresponding applications may be arranged in the application server to process a user request when it is received from the social media platform; subsequently, the cloud platform may invoke an interface of a corresponding device so as to carry out the monitoring operation requested by the user directed to the device.

Optionally, after the monitoring operation is completed, the fire or security system may return data information to the cloud platform, and the data information will then be transmitted to the social media platform via the application server such that the social media platform can push the data information to the user.

Optionally, a smart data analysis may be carried out on the cloud platform or in the application server, which may include, but is not limited to, a processing of fault diagnosis, prediction or analysis, etc., such that the data information through intelligent data processing may be transmitted to the user, or be pushed to the user based on his or her request.

Further, optionally, data information obtained by the application server from the fire or security system may be separately or additionally transmitted to a mobile communication terminal of the user. The access way (e.g., cell phone number) of the mobile communication terminal may be obtained when a user registers on the social media platform. In this manner, more routes of information transmission can be formed for the users. As stated above, the data information may be transmitted in the form of text, audio, picture and/or video; that is to say, the data information may be transmitted to a mobile communication terminal of a user by means of short message and multimedia message.

It should be pointed out that, in some optional embodiments, a database server may be provided to further enhance the functions such as data storage. For example, the aforesaid application server may be communicatively connected with the database server, and the contents such as a user request, monitoring operation, data information derived by monitoring operation from a fire or security system may be stored in such a database server, and the stored data may not only be shared by other systems, data centers, etc., but also be used in data processing and analysis, which can enable the purpose of data backup - this will help increase security performance of the whole system and prevent potential adverse influences due to causes such as disasters and abnormalities.

Moreover, in some optional embodiments, out of consideration of security, a user may be required to input register information when following official accounts or joining groups on a social media platform, the register information at least including user identity information such as name, telephone, address and/or company served, device information such as device code(s), producer(s), SN(s), IMEI(s) and/or installation position(s) of device(s) in fire or security system(s) relevant to a user permissions.

Further, in some optional embodiments, after a request sent by a user is received from a social media platform, authorization may be performed based on the aforesaid register information; if the authentication is passed, it means that the user's permission is fit for a monitoring operation requested by the user and, thus, normal processing may be carried out to the user request.

As a respect definitely excellent than prior arts, the present application further provides a system for monitoring a fire or security system. As an example for explanation, the system for monitoring a fire or security system may comprise a creation module and a processing module, which will be elaborated as follows.

Firstly, in terms of the creation module, it is configured to create on a social media platform one or more official accounts or groups. This or these official accounts or groups are associated with a fire or security system. After users has followed the official accounts or joined the groups on a social media platform, they may use the social media platform to carry out network information interaction with the fire or security system to perform monitoring operations directed to the fire or security system itself or the devices thereof. As for the specific meanings of expressions "associated with" and "fire or security system" and the particular configurations of the official accounts/groups, one may refer to corresponding descriptions in the preceding text since elaborations have been made therein.

Secondly, in terms of the processing module, it is configured to receive a request sent by a user via a social media platform so as to perform a monitoring operation to a device of a fire or security system, and/or push to a user data information relevant to a fire or security system.

To be specific, a user may send a request to the official accounts or groups on a social media platform, and the user might make the request to perform a monitoring operation directed to one device or some devices of a fire or security system (such as smog sensors, imaging sensors, gas sensors, water sensors, temperature sensors, fire extinguishers, fire hoses, fire or security indicators, fireproof masks, security indicators, emergency power supplies and/or emergency lights), or to obtain data information relevant to the fire or security system, or to deal with affairs of other aspects. The user request is received by the processing module such that a corresponding monitoring operation can be carried out to a corresponding device of the fire or security system. Moreover, based on the social media platform, the processing module can not only push data information relevant to a fire or security system to a user according to his or her request, but also voluntarily push data information such as emergency information, device fault information and device maintaining plan, relevant to a fire or security system to a user.

To further understand the system of the present invention, a specific embodiment is illustrated in Fig. 2. In the system of example, a cloud platform 2, an application server 3, a database server 4 and a social media platform 5 are provided, and the application functions of the creation module and the processing module as discussed above may be fulfilled through the cooperative work therebetween.

To be specific, the cloud platform 2 and the application server 3 are arranged between a fire or security system 1 and a social media platform 5 to make a communicative connection. Users may install on their mobile communication terminals 6 a social media tool such as Line, WeChat and WhatsAPP that is capable of providing the social media platform 5. Subsequently, a bidirectional network communication is enabled between the users and the fire or security system based on the social media platform 5, the application server 3, the cloud platform 2 to the fire or security system 1 (or an inverse route) so as to perform a monitoring operation directed to corresponding devices of the fire or security system 1, or enable the users to obtain the desired data information relevant to the fire or security system. As stated in the preceding text, the data information may be transmitted in multiple forms (e.g., text, audio, picture, video or their combinations, i.e., the means such as means of short message and multimedia message) to mobile communication terminals 6 of the users.

As illustrated in Fig. 2, in this embodiment, a database server 4 is further provided to serve the functions such as data storage service. The database server 4 is configured to be communicatively connected with the application server 3, and to store the contents of a user request, the contents of a monitoring operation, the data information obtained by a monitoring operation from a fire or security system, etc. The data stored in the database server 4 may be shared with other systems, data centers or the like, which can enable the purpose of data backup - this will help increase security performance of the whole system and prevent potential adverse influences due to the causes such as disasters and abnormalities.

It should be understood that, in the descriptions of the method for monitoring a fire or security system of the present invention made in the preceding text, the technical contents such as social media platform, user, group, official account, cloud platform, application server, database server, monitoring operation initiated by a user via a social media platform, pushing data information relevant to a fire or security system to a user, inputting register information by a user on a social media platform and user authorization have been described in detail. Thereby, one may directly refer to the explanations in corresponding parts of the preceding text and no redundant contents will be stated here.

It should be pointed out that, the present application allows any possible flexible designs, alterations and adjustments directed to the system for monitoring a fire or security system via network according to practical application conditions, without a deviation from the scope of the present invention as defined by the claims.

For example, in some optional embodiments, it is not necessary to provide the aforesaid database server 4. In some other embodiments, it is unnecessary to provide the above-mentioned cloud platform 2, application server 3 or database server 4, and in this case, one can enable corresponding functions of the creation module and the processing module by directly setting functional modules on the social media platform 5 and/or in the fire or security system

For another example, an information processing module may be optionally arranged on the cloud platform 2 or the application server 3, which may possess the function of smart data analysis, whereby it can provide more intelligent functions such as processing of fault diagnosis, prediction and analysis to voluntarily push the data information to a user through the processing of smart data analysis by the information processing module, or push the data information to a user based on his or her request.

In addition, the present invention provides a storage medium for storing instructions, wherein the instructions, when being executed, to implement the method for monitoring a fire or security system according to the present invention as exemplarily illustrated in Fig. 1, so as to achieve the advantages of the invention over prior arts as mentioned above.

The method and the system for monitoring a fire or security system, as well as the storage medium storing instructions to implement the method, according to the present invention have been explained above by way of examples, which are merely intended for the purpose of explaining the principle and implementing means of the present invention, rather than limiting it. The scope of the present invention is defined only by the following claims.

## Claims

1. A method for monitoring a fire or security system (1), comprising the steps of:
creating on a social media platform (5) one or more official accounts or groups associated with the fire or security system; and
pushing data information relevant to the fire or security system to a user that has followed the official accounts and/or joined the groups, and receiving a request sent by the user via the social media platform (5) to perform a monitoring operation directed to at least one device of the fire or security system (1),
wherein the step of pushing data information relevant to the fire or security system (1) to the user comprises transmitting to the user, via the social media platform (5), emergency information when an emergency happens to the fire or security system (1), the emergency information at least comprising an escape route in the position where the fire or security system (1) is, an exit route for evacuation and/or a current position of security and survival devices comprising a fireproof mask, a fire extinguisher, a fire hose, a fire indicator, an emergency power supply and an emergency light, and
wherein the monitoring operation comprises:
acquiring and/or processing event information of the fire or security system (1), which comprises a fire alarm and a device fault alarm;
acquiring a security notice of the fire or security system (1),
receiving said request in the monitoring operation, sent by the user via the social media platform, to re-start or stop the operation of corresponding devices of the fire or security system (1), and
obtaining information of one or more devices of the fire or security system (1), the information including device configuration information including structural parameters, operation parameters and installation positions, and device history information which are obtained and then displayed on a mobile communication terminal of the user.

2. The method according to claim 1, further comprising:
connecting the device communicatively with the social media platform (5) via a cloud platform (2) for at least storing interface information of the device and receiving and processing the request to perform a monitoring operation directed to the device by invoking an interface of the device.

3. The method according to claim 1, further comprising:
connecting the device communicatively with a cloud platform (2) for at least storing interface information of the device, and connecting the cloud platform communicatively with the social media platform (5) via an application server (3) for receiving and processing the request to perform a monitoring operation directed to the device by invoking an interface of the device via the cloud platform (2),
optionally further comprising:
connecting the application server (3) communicatively with a database server (4) for at least storing the content of the request, the content of the monitoring operation and/or the data information obtained by the monitoring operation from the fire or security system; and/or
providing the cloud platform (2) or the application server (3) with an information processing module with a smart data analysis function including fault diagnosis, prediction and analysis, to push the data information processed by the information processing module to the user.

4. The method according to claim 3, wherein the data information obtained by the monitoring operation from the fire or security system (1) are transmitted, in the form of text, audio, picture and/or video, via the application server (3) to a mobile communication terminal (6) of the user, an access way of which is provided by the user when registering on the social media platform (5).

5. The method according to any preceding claim, further comprising:
enabling the user, when following the official accounts or joining the groups, to input register information at least comprising user ID information and device information via the social media platform (5),
optionally further comprising:
performing authentication for the user based on the register information after the request is received, and processing the request if the authentication is passed.

6. The method according to any preceding claim, wherein the monitoring operation comprises one or more of the following:
acquiring information of one or more devices of the fire or security system (1), which comprises real-time device information, device configuration information, device control information and device history information; and
managing or configuring one or more devices of the fire or security system (1).

7. The method according to any preceding claim, wherein the step of pushing data information relevant to the fire or security system (1) to a user comprises one or more of the following:
transmitting to the user, via the social media platform (5), the data information obtained from the fire or security system (1) by the monitoring operation;
transmitting to the user, via the social media platform (5), a device maintaining plan and/or a reminder of a coming device maintaining plan of the fire or security system (1), the user comprising staff of the fire or security system.

8. The method according to any preceding claim, wherein the information relevant to the device is pushed, in the form of text, audio, picture and/or video, to the user via the social media platform (5).

9. The method according to any preceding claim, wherein the device comprises a smog sensor, an imaging sensor, a gas sensor, a water sensor, a temperature sensor, a fire extinguisher, a fire hose, a fire or security indicator, a fireproof mask, an emergency power supply and an emergency light.

10. A system for monitoring a fire or security system (1), comprising:
a creation module configured to create on a social media platform (5) one or more official accounts or groups associated with the fire or security system (1); and
a processing module configured to push data information relevant to the fire or security system (1) to a user that has followed the official accounts and/or joined the groups, and receive a request sent by the user via the social media platform (5) to perform a monitoring operation directed to at least one device of the fire or security system (1),
wherein the process of pushing data information relevant to the fire or security system (1) to a user comprises transmitting to the user, via the social media platform (5), emergency information when an emergency happens to the fire or security system (1), the emergency information at least comprising an escape route in the position where the fire or security system (1) is, an exit route for evacuation and/or a current position of security and survival devices comprising a fireproof mask, a fire extinguisher, a fire hose, a fire indicator, an emergency power supply and an emergency light, and
wherein the monitoring operation comprises:
the system is configured to acquire and/or process event information of the fire or security system (1), which comprises a fire alarm and a device fault alarm;
the system is configured to acquire a security notice of the fire or security system (1),
the system is configured to receive said request in the monitoring operation, sent by the user via the social media platform, to re-start or stop the operation of corresponding devices of the fire or security system (1), and
the system is configured to obtain information of one or more devices of the fire or security system (1), the information including device configuration information including structural parameters, operation parameters and installation positions, and device history information which are obtained and then displayed on a mobile communication terminal of a user.

11. The system according to claim 10, wherein the monitoring operation comprises one or more of the following:
acquiring information of one or more devices of the fire or security system (1), which comprises real-time device information, device configuration information, device control information and device history information; and
managing or configuring one or more devices of the fire or security system (1).

12. The system according to claim 10 or 11, wherein the process of pushing data information relevant to the fire or security system to a user comprises one or more of the following:
transmitting to the user, via the social media platform (5), the data information obtained from the fire or security system (1) by the monitoring operation;
transmitting to the user, via the social media platform (5), a device maintaining plan and/or a reminder of a coming device maintaining plan of the fire or security system (1), the user comprising staff of the fire or security system (1).

13. The system according to any one of claims 10-12, wherein the processing module is configured to push the information relevant to the device, in the form of text, audio, picture and/or video, to the user via the social media platform (5).

14. The system according to any one of claims 10-13, wherein the device comprises a smog sensor, an imaging sensor, a gas sensor, a water sensor, a temperature sensor, a fire extinguisher, a fire hose, a fire or security indicator, a fireproof mask, an emergency power supply and an emergency light.

15. A storage medium for storing instructions, when being executed, to implement the method for monitoring the fire or security system (1) according to any one of claims 1-9.

## Patentansprüche

1. Verfahren zur Überwachung eines Feuer- oder Sicherheitssystems (1), das die folgenden Schritte umfasst:
Erstellen eines oder mehrerer offizieller Konten oder Gruppen, die dem Feuer- oder Sicherheitssystem zugeordnet sind, auf einer Social-Media-Plattform (5); und
Senden von für das Feuer- oder Sicherheitssystem relevanten Dateninformationen an einen Benutzer, der den offiziellen Konten folgt und/oder den Gruppen beigetreten ist, und Empfangen einer von dem Benutzer über die Social-Media-Plattform (5) gesendeten Anforderung zum Durchführen eines Überwachungsvorgangs, der sich an mindestens eine Vorrichtung des Feuer- oder Sicherheitssystems (1) richtet,
wobei der Schritt des Sendens von für das Feuer- oder Sicherheitssystem (1) relevanten Dateninformationen an den Benutzer Übermitteln von Notfallinformationen über die Social-Media-Plattform (5) an den Benutzer umfasst, wenn bei dem Feuer- oder Sicherheitssystem (1) ein Notfall eintritt, wobei die Notfallinformationen mindestens einen Fluchtweg an der Position, an der sich das Feuer- oder Sicherheitssystem (1) befindet, einen Fluchtweg für die Evakuierung und/oder eine aktuelle Position von Sicherheits- und Überlebensvorrichtungen umfassen, die eine feuerfeste Maske, einen Feuerlöscher, einen Feuerwehrschlauch, einen Feuerindikator, eine Notstromversorgung und eine Notbeleuchtung umfassen, und
wobei der Überwachungsvorgang Folgendes umfasst:
Erfassen und/oder Verarbeiten von Ereignisinformationen des Feuer- oder Sicherheitssystems (1), die einen Feueralarm und einen Vorrichtungsstörungsalarm umfassen;
Erfassen einer Sicherheitsmeldung des Feuer- oder Sicherheitssystems (1),
Empfangen der von dem Benutzer über die Social-Media-Plattform gesendeten Anforderung in dem Überwachungsvorgang zum erneuten Starten oder Stoppen des Betriebs entsprechender Vorrichtungen des Feuer- oder Sicherheitssystems (1) und
Erhalten von Informationen zu einer oder mehreren Vorrichtungen des Feuer- oder Sicherheitssystems (1), wobei die Informationen Vorrichtungskonfigurationsinformationen, die bauliche Parameter, Betriebsparameter und Installationspositionen beinhalten, und Vorrichtungsverlaufsinformationen beinhalten, die erhalten und dann auf einem mobilen Kommunikationsendgerät des Benutzers angezeigt werden.

2. Verfahren nach Anspruch 1, ferner umfassend:
kommunikatives Verbinden der Vorrichtung mit der Social-Media-Plattform (5) über eine Cloud-Plattform (2), um mindestens Schnittstelleninformationen der Vorrichtung zu speichern und die Anforderung zum Durchführen eines Überwachungsvorgangs, der sich an die Vorrichtung richtet, durch Aufrufen einer Schnittstelle der Vorrichtung zu empfangen und zu verarbeiten.

3. Verfahren nach Anspruch 1, ferner umfassend:
kommunikatives Verbinden der Vorrichtung mit einer Cloud-Plattform (2), um mindestens Schnittstelleninformationen der Vorrichtung zu speichern und die Cloud-Plattform zum Empfangen und Verarbeiten der Anforderung zum Durchführen eines Überwachungsvorgangs, der sich an die Vorrichtung richtet, durch Aufrufen einer Schnittstelle der Vorrichtung über die Cloud-Plattform (2) über einen Anwendungsserver (3) kommunikativ mit der Social-Media-Plattform (5) zu verbinden,
optional ferner umfassend:
kommunikatives Verbinden des Anwendungsservers (3) mit einem Datenbankserver (4), um mindestens den Inhalt der Anforderung, den Inhalt des Überwachungsvorgangs und/oder die durch den Überwachungsvorgang von dem Feuer- oder Sicherheitssystem erhaltenen Dateninformationen zu speichern; und/oder
Bereitstellen eines Informationsverarbeitungsmoduls mit einer intelligenten Datenanalysefunktion, die Fehlerdiagnose, - vorhersage und -analyse beinhaltet, um die von dem Informationsverarbeitungsmodul verarbeiteten Dateninformationen an den Benutzer zu senden, auf der Cloud-Plattform (2) oder dem Anwendungsserver (3).

4. Verfahren nach Anspruch 3, wobei die durch den Überwachungsvorgang von dem Feuer- oder Sicherheitssystem (1) erhaltenen Dateninformationen in Form von Text, Audio, Bild und/oder Video über den Anwendungsserver (3) an ein mobiles Kommunikationsendgerät (6) des Benutzers übermittelt werden, dessen Zugriffsweg durch den Benutzer beim Anmelden auf der Social-Media-Plattform (5) bereitgestellt wird.

5. Verfahren nach einem der vorhergehenden Ansprüche, ferner umfassend:
Ermöglichen, dass der Benutzer beim Folgen der offiziellen Konten oder Beitreten zu den Gruppen Anmeldeinformationen, die mindestens Benutzer-ID-Informationen und Vorrichtungsinformationen umfassen, über die Social-Media-Plattform eingibt (5),
optional ferner umfassend:
Durchführen einer Authentifizierung für den Benutzer basierend auf den Anmeldeinformationen nach Empfangen der Anforderung und Verarbeiten der Anforderung, wenn die Authentifizierung erfolgreich war.

6. Verfahren nach einem der vorhergehenden Ansprüche, wobei der Überwachungsvorgang eines oder mehrere der Folgenden umfasst:
Erfassen von Informationen über eine oder mehrere Vorrichtungen des Feuer- oder Sicherheitssystems (1), die Echtzeit-Vorrichtungsinformationen,
Vorrichtungskonfigurationsinformationen, Vorrichtungssteuerungsinformationen und Vorrichtungsverlaufsinformationen umfassen; und
Verwalten oder Konfigurieren einer oder mehrerer Vorrichtungen des Feuer- oder Sicherheitssystems (1).

7. Verfahren nach einem der vorhergehenden Ansprüche, wobei der Schritt des Sendens von für das Feuer- oder Sicherheitssystem (1) relevanten Dateninformationen an einen Benutzer eines oder mehrere der Folgenden umfasst:
Übermitteln der durch den Überwachungsvorgang von dem Feuer- oder Sicherheitssystem (1) erhaltenen Dateninformationen über die Social-Media-Plattform (5) an den Benutzer;
Übermitteln eines Vorrichtungswartungsplans und/oder einer Erinnerung an einen bevorstehenden Vorrichtungswartungsplan des Feuer- oder Sicherheitssystems (1) an den Benutzer über die Social-Media-Plattform (5), wobei der Benutzer Mitarbeiter des Feuer- oder Sicherheitssystems umfasst.

8. Verfahren nach einem der vorhergehenden Ansprüche, wobei die für die Vorrichtung relevanten Informationen in Form von Text, Audio, Bild und/oder Video über die Social-Media-Plattform (5) an den Benutzer gesendet werden.

9. Verfahren nach einem der vorhergehenden Ansprüche, wobei die Vorrichtung einen Smogsensor, einen Bildgebungssensor, einen Gassensor, einen Wassersensor, einen Temperatursensor, einen Feuerlöscher, einen Feuerwehrschlauch, einen Feuer- oder Sicherheitsindikator, eine feuerfeste Maske, eine Notstromversorgung und eine Notbeleuchtung umfasst.

10. System zur Überwachung eines Feuer- oder Sicherheitssystems (1), umfassend:
ein Erstellungsmodul, das zum Erstellen eines oder mehrerer offizieller Konten oder Gruppen, die dem Feuer- oder Sicherheitssystem (1) zugeordnet sind, auf einer Social-Media-Plattform (5) konfiguriert ist; und
ein Verarbeitungsmodul, das zum Senden von für das Feuer- oder Sicherheitssystem (1) relevanten Dateninformationen an einen Benutzer, der den offiziellen Konten folgt und/oder den Gruppen beigetreten ist, und zum Empfangen einer von dem Benutzer über die Social-Media-Plattform (5) gesendeten Anforderung zum Durchführen eines Überwachungsvorgangs, der sich an mindestens eine Vorrichtung des Feuer- oder Sicherheitssystems (1) richtet, konfiguriert ist,
wobei der Prozess des Sendens von für das Feuer- oder Sicherheitssystem (1) relevanten Dateninformationen an einen Benutzer Übermitteln von Notfallinformationen über die Social-Media-Plattform (5) an den Benutzer umfasst, wenn bei dem Feuer- oder Sicherheitssystem (1) ein Notfall eintritt, wobei die Notfallinformationen mindestens einen Fluchtweg an der Position, an der sich das Feuer- oder Sicherheitssystem (1) befindet, einen Fluchtweg für die Evakuierung und/oder eine aktuelle Position von Sicherheits- und Überlebensvorrichtungen umfassen, die eine feuerfeste Maske, einen Feuerlöscher, einen Feuerwehrschlauch, einen Feuerindikator, eine Notstromversorgung und eine Notbeleuchtung umfassen, und
wobei der Überwachungsvorgang Folgendes umfasst:
das System ist zum Erfassen und/oder Verarbeiten von Ereignisinformationen des Feuer- oder Sicherheitssystems (1), die einen Feueralarm und einen Vorrichtungsstörungsalarm umfassen, konfiguriert;
das System ist zum Erfassen einer Sicherheitsmeldung des Feuer- oder Sicherheitssystems (1) konfiguriert,
das System ist zum Empfangen der von dem Benutzer über die Social-Media-Plattform gesendeten Anforderung in dem Überwachungsvorgang zum erneuten Starten oder Stoppen des Betriebs entsprechender Vorrichtungen des Feuer- oder Sicherheitssystems (1) konfiguriert und
das System ist zum Erhalten von Informationen zu einer oder mehreren Vorrichtungen des Feuer- oder Sicherheitssystems (1) konfiguriert, wobei die Informationen Vorrichtungskonfigurationsinformationen, die bauliche Parameter, Betriebsparameter und Installationspositionen beinhalten, und Vorrichtungsverlaufsinformationen beinhalten, die erhalten und dann auf einem mobilen Kommunikationsendgerät eines Benutzers angezeigt werden.

11. System nach Anspruch 10, wobei der Überwachungsvorgang eines oder mehrere der Folgenden umfasst:
Erfassen von Informationen über eine oder mehrere Vorrichtungen des Feuer- oder Sicherheitssystems (1), die Echtzeit-Vorrichtungsinformationen, Vorrichtungskonfigurationsinformationen, Vorrichtungssteuerungsinformationen und Vorrichtungsverlaufsinformationen umfassen; und
Verwalten oder Konfigurieren einer oder mehrerer Vorrichtungen des Feuer- oder Sicherheitssystems (1).

12. System nach Anspruch 10 oder 11, wobei der Prozess des Sendens von für das Feuer- oder Sicherheitssystem relevanten Dateninformationen an einen Benutzer eines oder mehrere der Folgenden umfasst:
Übermitteln der durch den Überwachungsvorgang von dem Feuer- oder Sicherheitssystem (1) erhaltenen Dateninformationen über die Social-Media-Plattform (5) an den Benutzer;
Übermitteln eines Vorrichtungswartungsplans und/oder einer Erinnerung an einen bevorstehenden Vorrichtungswartungsplan des Feuer- oder Sicherheitssystems (1) an den Benutzer über die Social-Media-Plattform (5), wobei der Benutzer Mitarbeiter des Feuer- oder Sicherheitssystems (1) umfasst.

13. System nach einem der Ansprüche 10-12, wobei das Verarbeitungsmodul zum Senden der für die Vorrichtung relevanten Informationen in Form von Text, Audio, Bild und/oder Video über die Social-Media-Plattform (5) an den Benutzer konfiguriert ist.

14. System nach einem der Ansprüche 10-13, wobei die Vorrichtung einen Smogsensor, einen Bildgebungssensor, einen Gassensor, einen Wassersensor, einen Temperatursensor, einen Feuerlöscher, einen Feuerwehrschlauch, einen Feuer- oder Sicherheitsindikator, eine feuerfeste Maske, eine Notstromversorgung und eine Notbeleuchtung umfasst.

15. Speichermedium zum Speichern von Anweisungen zum Implementieren des Verfahrens zum Überwachen des Feuer- oder Sicherheitssystems (1) nach einem der Ansprüche 1-9, wenn diese ausgeführt werden.

## Revendications

1. Procédé de surveillance d'un système de sécurité ou de détection d'incendie (1), comprenant les étapes de :
création sur une plateforme de médias sociaux (5) d'un ou de plusieurs comptes ou groupes officiels associés au système de sécurité ou de détection d'incendie ; et
transfert d'informations de données pertinentes au système de sécurité ou de détection d'incendie à un utilisateur qui a suivi les comptes officiels et/ou rejoint les groupes, et réception d'une demande envoyée par l'utilisateur via la plateforme de médias sociaux (5) pour exécuter une opération de surveillance dirigée vers au moins un dispositif du système de sécurité ou de détection d'incendie (1),
dans lequel l'étape de transfert d'informations de données pertinentes au système de sécurité ou de détection d'incendie (1) à l'utilisateur comprend la transmission à l'utilisateur, via la plateforme de médias sociaux (5), d'informations d'urgence lorsqu'une urgence survient au niveau du système de sécurité ou de détection d'incendie (1), les informations d'urgence comprenant au moins une voie d'évacuation à l'emplacement où se trouve le système de sécurité ou de détection d'incendie (1), une voie de sortie pour l'évacuation et/ou un emplacement actuel de dispositifs de sécurité et de survie comprenant un masque ignifuge, un extincteur, un tuyau d'incendie, un indicateur d'incendie, une alimentation électrique de secours et un éclairage de secours, et
dans lequel l'opération de surveillance comprend :
l'acquisition et/ou le traitement d'informations d'événement du système de sécurité ou de détection d'incendie (1), qui comprend une alarme incendie et une alarme de défaut de dispositif ;
l'acquisition d'un avis de sécurité du système de sécurité ou de détection d'incendie (1),
la réception de ladite demande dans l'opération de surveillance, envoyée par l'utilisateur via la plateforme de médias sociaux, pour redémarrer ou arrêter le fonctionnement de dispositifs correspondants du système de sécurité ou de détection d'incendie (1), et
l'obtention d'informations sur un ou plusieurs dispositifs du système de sécurité ou de détection d'incendie (1), les informations comportant des informations de configuration de dispositif comportant des paramètres structurels, des paramètres de fonctionnement et des emplacements d'installation, ainsi que des informations d'historique de dispositif qui sont obtenues, puis affichées sur un terminal de communication mobile de l'utilisateur.

2. Procédé selon la revendication 1, comprenant également :
la connexion du dispositif de manière communicative avec la plateforme de médias sociaux (5) via une plateforme cloud (2) pour au moins stocker des informations d'interface du dispositif et recevoir et traiter la demande d'exécution d'une opération de surveillance dirigée vers le dispositif en invoquant une interface du dispositif.

3. Procédé selon la revendication 1, comprenant également :
la connexion du dispositif de manière communicative à une plateforme cloud (2) pour au moins stocker des informations d'interface du dispositif, et la connexion de la plateforme cloud de manière communicative à la plateforme de médias sociaux (5) via un serveur d'application (3) pour recevoir et traiter la demande d'exécution d'une opération de surveillance dirigée vers le dispositif en invoquant une interface du dispositif via la plateforme cloud (2),
comprenant éventuellement également :
la connexion du serveur d'application (3) de manière communicative à un serveur de base de données (4) pour au moins stocker le contenu de la demande, le contenu de l'opération de surveillance et/ou les informations de données obtenues par l'opération de surveillance à partir du système de sécurité ou de détection d'incendie ; et/ou
la fourniture à la plateforme cloud (2) ou au serveur d'application (3) d'un module de traitement d'informations doté d'une fonction d'analyse de données intelligente comportant le diagnostic, la prédiction et l'analyse des pannes, pour transférer des informations de données traitées par le module de traitement d'informations à l'utilisateur.

4. Procédé selon la revendication 3, dans lequel les informations de données obtenues par l'opération de surveillance du système de sécurité ou de détection d'incendie (1) sont transmises, sous forme de texte, d'audio, d'image et/ou de vidéo, via le serveur d'application (3) à un terminal de communication mobile (6) de l'utilisateur, dont un moyen d'accès est fourni par l'utilisateur lors de son inscription sur la plateforme de médias sociaux (5).

5. Procédé selon une quelconque revendication précédente, comprenant également :
l'autorisation pour l'utilisateur, lorsqu'il suit les comptes officiels ou rejoint les groupes, de saisir des informations d'inscription comprenant au moins des informations d'identification d'utilisateur et des informations de dispositif via la plateforme de médias sociaux (5),
comprenant éventuellement également :
la réalisation de l'authentification de l'utilisateur sur la base des informations d'inscription après réception de la demande, et le traitement de la demande si l'authentification est réussie.

6. Procédé selon une quelconque revendication précédente, dans lequel l'opération de surveillance comprend une ou plusieurs des opérations suivantes :
l'acquisition d'informations sur un ou plusieurs dispositifs du système de sécurité ou de détection d'incendie (1), qui comprennent des informations de dispositif en temps réel, des informations de configuration de dispositif, des informations de contrôle de dispositif et des informations d'historique de dispositif ; et
la gestion ou la configuration d'un ou de plusieurs dispositifs du système de sécurité ou de détection d'incendie (1) .

7. Procédé selon une quelconque revendication précédente, dans lequel l'étape de transfert d'informations de données pertinentes au système de sécurité ou de détection d'incendie (1) à un utilisateur comprend une ou plusieurs des opérations suivantes :
la transmission à l'utilisateur, via la plateforme de médias sociaux (5), des informations de données obtenues à partir du système de sécurité ou de détection d'incendie (1) par l'opération de surveillance ;
la transmission à l'utilisateur, via la plateforme de médias sociaux (5), d'un plan de maintenance de dispositif et/ou d'un rappel d'un plan de maintenance de dispositif à venir du système de sécurité ou de détection d'incendie (1), l'utilisateur comprenant le personnel du système de sécurité ou de détection d'incendie.

8. Procédé selon une quelconque revendication précédente, dans lequel les informations pertinentes pour le dispositif sont transférées, sous forme de texte, d'audio, d'image et/ou de vidéo, à l'utilisateur via la plateforme de médias sociaux (5) .

9. Procédé selon une quelconque revendication précédente, dans lequel le dispositif comprend un capteur de smog, un capteur d'imagerie, un capteur de gaz, un capteur d'eau, un capteur de température, un extincteur, un tuyau d'incendie, un indicateur d'incendie ou de sécurité, un masque ignifuge, une alimentation électrique de secours et un éclairage de secours.

10. Système de surveillance d'un système de sécurité ou de détection d'incendie (1), comprenant :
un module de création configuré pour créer sur une plateforme de médias sociaux (5) un ou plusieurs comptes ou groupes officiels associés au système de sécurité ou de détection d'incendie (1) ; et
un module de traitement configuré pour transférer des informations de données pertinentes au système de sécurité ou de détection d'incendie (1) à un utilisateur qui a suivi les comptes officiels et/ou rejoint les groupes, et recevoir une demande envoyée par l'utilisateur via la plateforme de médias sociaux (5) pour exécuter une opération de surveillance dirigée vers au moins un dispositif du système de sécurité ou de détection d'incendie (1),
dans lequel le processus de transfert d'informations de données pertinentes au système de sécurité ou de détection d'incendie (1) à un utilisateur comprend la transmission à l'utilisateur, via la plateforme de médias sociaux (5), d'informations d'urgence lorsqu'une urgence survient au niveau du système de sécurité ou de détection d'incendie (1), les informations d'urgence comprenant au moins une voie d'évacuation à l'emplacement où se trouve le système de sécurité ou de détection d'incendie (1), une voie de sortie pour l'évacuation et/ou un emplacement actuel de dispositifs de sécurité et de survie comprenant un masque ignifuge, un extincteur, un tuyau d'incendie, un indicateur d'incendie, une alimentation électrique de secours et un éclairage de secours, et
dans lequel l'opération de surveillance comprend :
le système est configuré pour acquérir et/ou traiter des informations d'événement du système de sécurité ou de détection d'incendie (1), qui comprend une alarme incendie et une alarme de défaut de dispositif ;
le système est configuré pour acquérir un avis de sécurité du système de sécurité ou de détection d'incendie (1),
le système est configuré pour recevoir ladite demande dans l'opération de surveillance, envoyée par l'utilisateur via la plateforme de médias sociaux, pour redémarrer ou arrêter le fonctionnement de dispositifs correspondants du système de sécurité ou de détection d'incendie (1), et
le système est configuré pour obtenir des informations sur un ou plusieurs dispositifs du système de sécurité ou de détection d'incendie (1), les informations comportant des informations de configuration de dispositif comportant des paramètres structurels, des paramètres de fonctionnement et des emplacements d'installation, ainsi que des informations d'historique de dispositif qui sont obtenues, puis affichées sur un terminal de communication mobile d'un utilisateur.

11. Système selon la revendication 10, dans lequel l'opération de surveillance comprend une ou plusieurs des opérations suivantes :
l'acquisition d'informations sur un ou plusieurs dispositifs du système de sécurité ou de détection d'incendie (1), qui comprennent des informations de dispositif en temps réel, des informations de configuration de dispositif, des informations de contrôle de dispositif et des informations d'historique de dispositif ; et
la gestion ou la configuration d'un ou de plusieurs dispositifs du système de sécurité ou de détection d'incendie (1) .

12. Système selon la revendication 10 ou 11, dans lequel le processus de transfert d'informations de données pertinentes pour le système de sécurité ou de détection d'incendie à un utilisateur comprend une ou plusieurs des opérations suivantes :
la transmission à l'utilisateur, via la plateforme de médias sociaux (5), des informations de données obtenues à partir du système de sécurité ou de détection d'incendie (1) par l'opération de surveillance ;
la transmission à l'utilisateur, via la plateforme de médias sociaux (5), d'un plan de maintenance de dispositif et/ou d'un rappel d'un plan de maintenance de dispositif à venir du système de sécurité ou de détection d'incendie (1), l'utilisateur comprenant le personnel du système de sécurité ou de détection d'incendie (1).

13. Système selon l'une quelconque des revendications 10 à 12, dans lequel le module de traitement est configuré pour transférer les informations pertinentes au dispositif, sous forme de texte, d'audio, d'image et/ou de vidéo, à l'utilisateur via la plateforme de médias sociaux (5).

14. Système selon l'une quelconque des revendications 10 à 13, dans lequel le dispositif comprend un capteur de smog, un capteur d'imagerie, un capteur de gaz, un capteur d'eau, un capteur de température, un extincteur, un tuyau d'incendie, un indicateur d'incendie ou de sécurité, un masque ignifuge, une alimentation électrique de secours et un éclairage de secours.

15. Support de stockage pour stocker des instructions, lorsqu'elles sont exécutées, pour mettre en œuvre le procédé de surveillance du système de sécurité ou de détection d'incendie (1) selon l'une quelconque des revendications 1 à 9.
